# EUROPÄISCHE PATENTSCHRIFT

(11) **EP 3 476 016 B1**
(45) Veröffentlichungstag und Bekanntmachung des Hinweises auf die Patenterteilung: **29.05.2024**
(21) Anmeldenummer: 17743308.3
(22) Anmeldetag: 19.07.2017
(51) Int. Cl.: H02B 3/00, H02B 13/055, H01H 33/57

(54) **LEBENSZYKLUSMANAGEMENT EINES ELEKTRISCH ISOLIERENDEN FLUIDS**
LIFE CYCLE MANAGEMENT OF AN ELECTRICALLY INSULATING FLUID
GESTION DU CYCLE DE VIE D'UN FLUIDE ISOLANT ÉLECTRIQUE

(30) Priorität: 19.08.2016 DE 102016215598
(43) Veröffentlichungstag der Anmeldung: 01.05.2019
(73) Patentinhaber: Siemens Energy Global GmbH & Co. KG, 81739 München (DE)
(72) Erfinder: BAUER, Sascha, 10318 Berlin (DE); EHRLICH, Frank, 16562 Hohen Neuendorf (DE); LUTZ, Bernhard, 10629 Berlin (DE)
(86) Internationale Anmeldenummer: PCT/EP2017/068177
(87) Internationale Veröffentlichungsnummer: WO 2018/033332

(56) Entgegenhaltungen:
- WO-A1-2016/120022
- DE-A1- 2 633 355
- DE-A1- 2 702 763
- DE-A1-102012 209 307
- GB-A- 1 290 648
- US-A- 4 211 542
- US-A1- 2012 103 941

## Beschreibung

Die Erfindung betrifft ein Lebenszyklusmanagement eines elektrisch isolierenden Fluids, welches zu einem elektrischen Isolieren in einem Fluidaufnahmeraum einer Elektroenergieübertragungseinrichtung anzuordnen ist, wobei das Fluid zumindest teilweise durch aus der Umgebung der Elektroenergieübertragungseinrichtung entnommene atmosphärische Luft gebildet ist.

Eine Elektroenergieübertragungseinrichtung ist beispielsweise aus der Europäischen Patentanmeldung EP 1 441 171 A2 bekannt. Die dortige Elektroenergieübertragungseinrichtung weist ein Kapselungsgehäuse auf mit Fluidaufnahmeraum auf, in welchem ein elektrisch isolierendes Fluid eingeschlossen ist. Als elektrisch isolierendes Fluid wird dort ein technisches Gas eingesetzt. Technische Gase werden in stationären Einrichtungen hergestellt. Ein Transport vom Herstellungsort des technischen Gases zu der Elektroenergieübertragungseinrichtung ist aufwendig. Oftmals sind für den Transport spezielle Umweltauflagen zu erfüllen. Bei Transporten von technischen Gasen in Druckbehältern sind weitere Sicherheitsvorschriften zu beachten. Nach einer Entnahme des technischen Gases aus dem Fluidaufnahmeraum ist dieses wiederum abzutransportieren. Das Gashandling stellt somit einen aufwändigen Prozess dar.

Aus dem Patent GB 1 290 648 ist ein Zwei-Druckgerät bekannt, in welchem zu Antriebszwecken gereinigte Luft komprimiert wird.

Aus der Offenlegungsschrift DE 10 2012 209 307 A1 ist eine druckgasisolierte Elektroenergieübertragungseinrichtung bekannt, welche in einem Stützisolator mit der Umgebung korrespondierende atmosphärische Luft enthalten ist.

Im US-Patent US 4,211,542 ist eine Vorrichtung zum Erzeugen von komprimierter Luft für elektrische Schalteinrichtungen entnehmbar.

Die Offenlegungsschrift DE 2633355 A1 beschreibt ein Verfahren zum Füllen gekapselter Hochspannungsanlagen mit einem Isoliergas.

Der Veröffentlichung WO 2016/120022 A1 ist ein veränderbarer Verbindungsabschnitt entnehmbar, der einen Hohlraum aufweist. Der Hohlraum steht mit der Umgebung des Verbindungsabschnittes in Kontakt.

Aus der US 2012/103941 A1 ist eine elektrische Schalteinrichtungen entnehmbar, deren Druckraum mit trockener Luft aufweisend einen Druck kleiner 2 MPa und einen Wassergehalt von allenfalls 10 ppm als Isoliergas gefüllt ist.

Aus der DE 27 02 763 A1 ist eine Drucklufterzeugungsanlage zur Erzeugung sehr trockener und sauberer Druckluft bekannt, bei der ein Verdichter Druckluft erzeugt, die nach Behandlung in einen Druckluftspeicher gelangt.

Aufgabe der Erfindung ist es, ein Lebenszyklusmanagement für ein elektrisch isolierendes Fluid anzugeben, welches zu einem elektrischen Isolieren in einem Fluidaufnahmeraum einer Elektroenergieübertragungseinrichtung anzuordnen ist. Dabei ist es Aufgabe des Lebenszyklusmanagements, über die Zeit der Verwendung des elektrisch isolierenden Fluids, also von der Gestehung des elektrisch isolierenden Fluids bis zur Entsorgung des elektrisch isolierenden Fluids, ein effektives Verfahren zur Verfügung zu stellen.

Die Aufgabe wird bei einer Elektroenergieübertragungseinrichtung der eingangs genannten Art durch einen Gegenstand mit den Merkmalen des Anspruch 1 gelöst.

Eine Elektroenergieübertragungseinrichtung dient einer Übertragung von elektrischer Energie. Dazu weist die Elektroenergieübertragungseinrichtung einen Phasenleiter auf, welcher unter Beaufschlagung einer Potentialdifferenz einen elektrischen Strom führt. Der Phasenleiter einer Elektroenergieübertragungseinrichtung ist dabei elektrisch zu isolieren, um Kurzschlüsse während einer Spannungsbeaufschlagung/Stromführung zu vermeiden. Zur elektrischen Isolation kann der Phasenleiter zumindest abschnittsweise von einem elektrisch isolierenden Fluid umspült sein. Dabei wird durch das elektrisch isolierende Fluid eine Isolationsstrecke von dem Phasenleiter zu einem ein abweichendes elektrisches Potential führenden Bauteil ausgebildet. Eine Isolationsstrecke kann sich beispielsweise zwischen dem Phasenleiter und einem Kapselungsgehäuse, welches den Fluidaufnahmeraum begrenzt, erstrecken. Der Phasenleiter ist beispielsweise gegenüber dem Kapselungsgehäuse elektrisch isoliert beabstandet und bevorzugt am Kapselungsgehäuse elektrisch isoliert abgestützt. Dazu kann das Kapselungsgehäuse selbst zumindest abschnittsweise elektrisch isolierende Abschnitte aufweisen. Es kann jedoch auch vorgesehen sein, dass separate Stützisolatoren angeordnet sind, welche den Phasenleiter gegenüber dem Kapselungsgehäuse abstützen. Weiterhin kann das Kapselungsgehäuse zumindest abschnittsweise aus elektrisch leitenden Materialien gebildet sein. Bevorzugt weisen derartig elektrisch leitende Abschnitte eines Kapselungsgehäuses Erdpotential auf, so dass eine definierte Potentialführung am Kapselungsgehäuse gegeben ist.

Ein elektrisch isolierendes Fluid ist bevorzugt flüssig oder gasförmig in einem Fluidaufnahmeraum angeordnet. Das elektrisch isolierende Fluid ist dabei ein elektrisch isolierender Stoff, wobei das elektrisch isolierende Fluid eine chemische Verbindung oder auch ein Gemisch verschiedener Verbindungen aufweisen kann. So ist es beispielsweise möglich, ein so genanntes Trägerfluid zu verwenden, welches mit einem weiteren Fluid angereichert wird. Dadurch kann in Abhängigkeit der vorherrschenden Spannungs- und Stromverhältnisse eine Mindestspannungsfestigkeit des elektrisch isolierenden Fluids herbeigeführt werden. Das elektrisch isolierende Fluid kann so beispielsweise Mischungen mit Stickstoff, Sauerstoff, Kohlendioxid, Schwefelhexafluorid, Fluorketonen, Fluornitrilen oder anderen fluorhaltigen Verbindungen aufweisen. Bevorzugt kann die aus der Umgebung entnommene atmosphärische Luft als Trägerfluid dienen. Das elektrisch isolierende Fluid kann auch vollständig aus der Umgebung entnommener atmosphärischer Luft gebildet sein.

Eine Zusammensetzung des Fluides, zumindest zu Teilen atmosphärischer Luft aus der Umgebung der Elektroenergieübertragungseinrichtung ermöglicht es, dass das benötigte Volumen an technischen Gasen, welche entfernt vom Aufstellungsort der Elektroenergieübertragungseinrichtung zu synthetisieren sind, reduziert wird. Mit einem reduzierten Bedarf an technischen Gasen reduziert sich der Aufwand hinsichtlich des Transportes, wodurch ein Kosten- und Umweltvorteil entsteht. Die atmosphärische Luft ist unmittelbar in der Nähe der Elektroenergieübertragungseinrichtung entnommen und in den Fluidaufnahmeraum verbracht. Dadurch ist die Möglichkeit gegeben, das Fluid beispielsweise vollständig aus atmosphärischer Luft, welches aus der Umgebung der Elektroenergieübertragungseinrichtung entnommen wurde, zu bilden oder diese atmosphärische Luft zu nutzen, um ein Fluid für den Fluidaufnahmeraum anzureichern. Insbesondere kann die entnommene atmosphärische Luft dabei als Trägerfluid dienen. Es kann jedoch auch vorgesehen sein, dass atmosphärische Luft lediglich in Minderanteilen im Fluid enthalten ist.

Das elektrisch isolierende Fluid kann im Fluidaufnahmeraum hermetisch eingeschlossen sein. Dabei kann das Fluid im Fluidaufnahmeraum unter Überdruck gesetzt werden, so dass die elektrisch isolierenden Eigenschaften zusätzlich verbessert werden. Ein den Fluidaufnahmeraum begrenzendes Kapselungsgehäuse kann dann als Druckbehälter fungieren.

Erfindungsgemäß ist die atmosphärische Luft vor Ort behandelt, insbesondere gereinigt.

Je nach elektrischen Anforderungen, welche an das Fluid gestellt werden, ist die atmosphärische Luft einer Behandlung unterzogen, um eine Mindestqualität sicherzustellen.

Dies ist insbesondere dann von Vorteil, wenn Elektroenergieübertragungseinrichtungen für den Einsatz an verschiedenen Orten in verschiedenen Klimazonen vorgesehen sind. Dadurch kann mittels der Behandlung der atmosphärischen Luft vor Ort eine Standardisierung des Fluids, welches in den Fluidaufnahmeraum verbracht werden soll, erzielt werden. Durch eine Reinigung der atmosphärischen Luft können beispielsweise Fremdstoffe, wie Stäube, Aerosole, organische Verbindungen, Fremdgase usw. aus der in den Fluidaufnahmeraum zu verbringenden atmosphärischen Luft abgeschieden werden. Eine derartige Behandlung kann je nach Aufstellungsort bzw. je nach Elektroenergieübertragungseinrichtung variieren und kann unterschiedliche Stufen aufweisen. Neben einem Reinigen kann ein Behandeln auch ein Anreichern der atmosphärischen Luft umfassen. Eine Anreicherung kann beispielsweise durch Stoffe (insbesondere fluide Stoffe) erfolgen, welche die Isolationsfestigkeit verbessern, die Stabilität verbessern usw. Ein Behandeln kann auch ein Entfernen von Stoffen aus dem Fluid umfassen. So kann durch eine Behandlung beispielsweise der Sauerstoffgehalt reduziert werden. Eine Behandlung kann auch eine anderweitige Beeinflussung/Veränderung am Fluid umfassen. Beispielsweise kann das Fluid einer elektromagnetischen Strahlung ausgesetzt werden. Vorteilhaft kann die behandelte atmosphärische Luft einen Anteil von ca. 65 % bis ca. 100°%, insbesondere von ca. 80 % Stickstoff sowie einen Anteil von ca. 0°% bis ca. 35°%, insbesondere ca. 20 % Sauerstoff, aufweisen. Zur Behandlung der atmosphärischen Luft können sogenannte Nullluftgeneratoren verwandt werden.

Erfindungsgemäß ist weiterhin vorgesehen, dass vor einem Einfüllen des Fluids der Fluidaufnahmeraum evakuiert ist.

Ein Evakuieren des Fluidaufnahmeraumes erweist sich als vorteilhaft, um in dem Fluidaufnahmeraum enthaltene Stoffe wie Fluide wie beispielsweise undefinierte atmosphärische Luft sowie in dem Fluidaufnahmeraum befindliche Partikel und Aerosole aus dem Fluidaufnahmeraum zu entfernen und einen nahezu teilchenfreien Fluidaufnahmeraum zur Verfügung zu stellen.

Bei einer Behandlung der atmosphärischen Luft vor einem Verbringen in den Fluidaufnahmeraum kann so sichergestellt werden, dass eine nachträgliche Verunreinigung und damit eine Beeinflussung der elektrischen Isolationsfestigkeit des Fluids verhindert ist.

Erfindungsgemäß ist weiterhin vorgesehen, dass die atmosphärische Luft vor einem Einfüllen behandelt, insbesondere gereinigt wird.

Ein Behandeln der atmosphärischen Luft vor einem Einfüllen derselben in den Fluidaufnahmeraum ermöglicht es, bereits vor einem Einfüllen des Fluids in dem Fluid enthaltene Fremdstoffe zu entfernen. Entsprechend kann ein Verschmutzen des Fluidaufnahmeraumes durch unbehandelte atmosphärische Luft verhindert werden.

Eine weitere vorteilhafte Ausgestaltung kann vorsehen, dass das Fluid in die Atmosphäre entlassen wird.

Ein Entlassen des Fluids in die Atmosphäre ermöglicht es, auf ein Entsorgen des Fluids zu verzichten, insbesondere wenn das Fluid zu einem Großteil, insbesondere vollständig, aus der atmosphärischen Luft, insbesondere aus der Umgebung der Elektroenergieübertragungseinrichtung entnommener atmosphärischer Luft gebildet ist. So kann ein Kostenvorteil erzielt werden, da ein Transport des Fluids entfällt. Gegebenenfalls kann vor einem Entlassen des Fluids in die Atmosphäre eine Behandlung des Fluids vorgesehen sein. So kann das Fluid beispielsweise einen Katalysator passieren, in welchem beispielsweise während eines Betriebes der Elektroenergieübertragungseinrichtung in dem Fluid angereicherte Fremdstoffe gewandelt werden. Es kann auch vorgesehen sein, dass zur Behandlung Filter eingesetzt werden, um Fremdstoffe zu binden. So ist es beispielsweise möglich, in einem Katalysator/Filter Aerosole wie Öle umzuwandeln bzw. zu binden, so dass die atmosphärische Luft, welche in die Atmosphäre entlassen wird, einen hohen Reinheitsgrad aufweist. Bevorzugt kann eine Behandlung einer Entfernung von Stickoxiden dienen. Stickoxide können katalytisch behandelt/gewandelt werden.

Die Verwendung bzw. Entnahme von atmosphärischer Luft aus der Umgebung der Elektroenergieübertragungseinrichtung gestattet es weiterhin, im Servicefall der Elektroenergieübertragungseinrichtung in vereinfachter Weise ein Fluid in den Fluidaufnahmeraum nachzufüllen, so dass beispielsweise Fluidverluste ausgeglichen werden können. Auf Grund der Entnahme aus der Umgebung, ist so die Möglichkeit gegeben, auf ein Vorhalten von Speicherbehältern z. B. für ein technisches Gas zu verzichten und stattdessen bedarfsweise die notwendigen Fluidmengen aus der Umgebung der Elektroenergieübertragungseinrichtung zu beschaffen. So kann man beispielsweise auch eine automatisierte Überwachungseinrichtung für das elektrisch isolierende Fluid vorsehen, welche gegebenenfalls bei Bedarf oder turnusmäßig das elektrisch isolierende Fluid im Fluidaufnahmeraum auffüllt bzw. auch austauscht.

Erfindungsgemäß wird vor einer Verbringung der entnommenen Luft in den Fluidaufnahmeraum derselbe evakuiert.

Eine Entnahme von atmosphärischer Luft aus der Umgebung, eine Behandlung der entnommenen Luft und ein Verbringen der behandelten Luft in den Fluidaufnahmeraum ermöglicht es, auf natürliche Ressourcen zur Bildung eines Fluids zurückzugreifen. Das Fluid kann in einfacher Weise beschafft werden, Transportwege werden verkürzt und auf Grund der Verwendung von atmosphärischer Luft kann nach einem Ende der Nutzung des Fluids in der Elektroenergieübertragungseinrichtung in vereinfachter Weise das Fluid auch wieder entsorgt werden. Dadurch ergibt sich eine kostengünstige Gestehung des Fluids während des Lebenszyklus.

Eine weitere vorteilhafte Ausgestaltung kann vorsehen, dass das Fluid unter Überdruck gesetzt wird.

Durch eine Druckbeaufschlagung des Fluids kann die elektrische Isolationsfestigkeit desselben zusätzlich erhöht werden. Dazu kann ein Fluidaufnahmeraum, in welchem das elektrisch isolierende Fluid angeordnet ist, von einem Kapselungsgehäuse begrenzt sein, welches einen Druckbehälter darstellt. Entsprechend kann ein Überdruck im Fluidaufnahmeraum erzeugt werden. Durch den Überdruck kann die elektrische Isolationsfestigkeit des elektrisch isolierenden Fluids verbessert werden, wodurch die Ausdehnung der zur Isolation vorzusehenden Isolationsstrecken reduziert werden kann.

Die Evakuierung des Fluidaufnahmeraums vor einem Einbringen des Fluids ermöglicht es, den nach einer Behandlung der entnommenen Luft erreichten Qualitätsstandard (definierte Isolationsfestigkeit) auch nach einem Verbringen in den Fluidaufnahmeraum aufrecht zu erhalten. Durch das Evakuieren werden aus dem Fluidaufnahmeraum undefinierte Fremdstoffe wie Fluide entfernt, so dass die behandelte Luft in den Fluidaufnahmeraum eingebracht werden kann, ohne nachteilig beeinflusst zu werden. Durch die Evakuierung des Fluidaufnahmeraumes ist es möglich, die Behandlung der entnommenen Luft auf ein Minimum zu reduzieren, da Sicherheitsmargen, welche zum Sicherstellen von Mindeststandards für die behandelte Luft vorzusehen sind, reduziert werden können.

Erfindungsgemäß ist die entnommene Luft in einem Speichervolumen zwischengespeichert, wobei die Speicherkapazität des Speichervolumens kleiner als die Aufnahmekapazität des Fluidaufnahmeraumes sein kann.

Die entnommene Luft ist in einem Speichervolumen zwischengespeichert, so dass die im Speichervolumen zwischengespeicherte Luft bedarfsweise zu einem späteren Zeitpunkt entnommen werden kann. Dabei kann vorgesehen sein, dass in dem Speichervolumen die bereits behandelte Luft zwischengespeichert wird. Die Speicherkapazität des Speichervolumens sollte dabei kleiner sein als die Aufnahmekapazität des Fluidaufnahmeraumes. Dadurch kann die Mobilität von Einrichtungen, welche zur Aufbereitung der atmosphärischen Luft vorgesehen sind, erhalten bleiben. Weiterhin kann mittels des Speichervolumens eine kontinuierliche Behandlung unterstützt werden, da durch das Speichervolumen z. B. Schwankungen bei der Bereitstellung von aus der Umgebung entnommener Luft ausgeglichen werden können.

Eine weitere vorteilhafte Ausgestaltung kann vorsehen, dass das im Fluidaufnahmeraum befindliche Fluid in die Umgebung abgelassen wird.

Durch ein Entlassen des Fluids in die Umgebung ist zum Ende des Lebenszyklus in einfacher Weise ein kostengünstiges Entsorgen des Fluids möglich. Auf Grund der Verwendung der atmosphärischen Luft, um das Fluid zu bilden, kann bei der Entlassung des Fluids in die Umgebung das einmal entnommene Fluid zurückgegeben werden, so dass ein geschlossener Kreislauf gebildet ist. Weiterhin können durch die Entlassung des Fluids in die Umgebung Transportwege reduziert werden. Weiterhin kann vorteilhaft vorgesehen sein, dass vor einer Abgabe des Fluids an die Umgebung das Fluid behandelt, insbesondere gereinigt wird.

Innerhalb des Fluidaufnahmeraumes fungiert das Fluid als elektrische Isolation, wobei das elektrisch isolierende Fluid im Regelfalle keiner Veränderung unterworfen ist. Es kann jedoch eine Verunreinigung des im Fluidaufnahmeraum befindlichen Fluids auftreten. Dies kann beispielsweise durch Havarien, Lichtbogeneinflüsse usw. erfolgen. Durch eine Behandlung, insbesondere durch eine Reinigung des Fluids, können unerwünschte Bestandteile aus dem Fluid entnommen werden. So können beispielsweise Aerosole, Zersetzungsprodukte usw. dem Fluid entnommen werden. Bevorzugt können mittels eines Katalysators Stickoxide gewandelt werden.

Im Folgenden wird ein Ausführungsbeispiel der Erfindung in einer Zeichnung schematisch gezeigt und nachfolgend näher beschrieben.

Dabei zeigt die
- Figur: eine Elektroenergieübertragungseinrichtung im Querschnitt mit einer angeschlossenen Wartungseinheit.

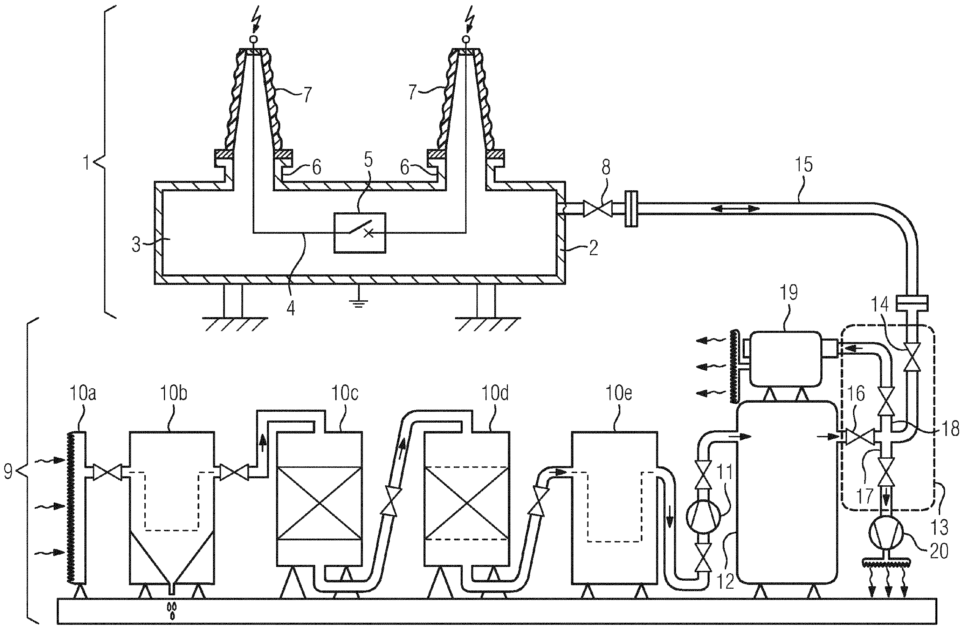

In der Figur ist beispielhaft eine Elektroenergieübertragungseinrichtung 1 abgebildet. Die Elektroenergieübertragungseinrichtung 1 ist beispielhaft als fluidisolierter Leistungsschalter ausgeführt. Der Leistungsschalter weist eine sogenannte Dead-Tank-Bauform auf. Darüber hinaus sind aber auch jegliche weitere Ausgestaltungen von Elektroenergieübertragungseinrichtungen 1 vorstellbar, welche einen Fluidaufnahmeraum aufweisen. So können beispielsweise Leistungsschalter in Life-Tank-Bauweise oder so genannte gasisolierte Schaltanlagen als Elektroenergieübertragungseinrichtungen 1 dienen. Neben Elektroenergieübertragungseinrichtungen 1 mit aktiven Baugruppen (schaltfähigen Baugruppen) im Fluidaufnahmeraum können Elektroenergieübertragungseinrichtungen 1 auch lediglich passive Baugruppen im Fluidaufnahmeraum aufweisen. In passiven Baugruppen treten keine Schaltvorgänge auf.

Die Elektroenergieübertragungseinrichtung 1 weist ein Kapselungsgehäuse 2 auf. Das Kapselungsgehäuse 2 ist hier im Wesentlichen als hohlzylindrischer Körper mit im Wesentlichen kreisförmigem Querschnitt ausgebildet. Stirnseitig ist der hohlzylindrische Hohlkörper fluiddicht verschlossen. Das Kapselungsgehäuse 2 begrenzt in seinem Innern einen Fluidaufnahmeraum 3. Im Fluidaufnahmeraum 3 ist ein Phasenleiter 4 angeordnet. Der Phasenleiter 4 ist vorliegend mit einer Schalteinrichtung 5 ausgestattet (aktive Baugruppe). Der Phasenleiter 4 ist zentrisch im Kapselungsgehäuse 2 gelagert und erstreckt sich beiderseits der Schalteinrichtung 5 sowie innerhalb der Schalteinrichtung 5. Um den Phasenleiter 4 elektrisch zu kontaktieren, sind am Kapselungsgehäuse 2 mantelseitige Stutzen 6 angeordnet. Auf den mantelseitigen Stutzen 6 sind so genannte Freiluftdurchführungen 7 angeordnet. Die Freiluftdurchführungen 7 dienen einem elektrisch isolierten Passieren des Phasenleiters 4 durch eine Wandung des Kapselungsgehäuses 2 in die Umgebung der Elektroenergieübertragungseinrichtung 1. Der Phasenleiter 4 läuft so von der Umgebung der Elektroenergieübertragungseinrichtung 1 kommend in das Kapselungsgehäuse 2 hinein, durchläuft dort die Schalteinrichtung 5 und verlässt das Kapselungsgehäuse 2 wieder in die Umgebung der Elektroenergieübertragungseinrichtung 1.

Der hohlzylindrische Grundkörper des Kapselungsgehäuses 2 ist aus einem elektrisch leitenden Material gebildet. Die elektrisch leitenden Abschnitte des Kapselungsgehäuses 2 sind mit Erdpotential beaufschlagt. Das Kapselungsgehäuse 2 bzw. der Fluidaufnahmeraum 3 bilden eine fluiddichte Barriere, so dass ein Fluid aus dem Fluidaufnahmeraum 3 nicht hinaustreten kann.

Das Kapselungsgehäuse 2 weist eine Befüllarmatur 8 auf. Mittels der Befüllarmatur 8 ist die Möglichkeit gegeben, den Fluidaufnahmeraum 3 mit einem elektrisch isolierenden Fluid zu befüllen bzw. ein elektrisch isolierendes Fluid aus dem Fluidaufnahmeraum 3 zu entfernen. Dazu weist die Befüllarmatur 8 ein Ventil auf, mittels welchem die Befüllarmatur 8 geöffnet und geschlossen werden kann. Zum Befüllen oder Entleeren des Fluidaufnahmeraums 3 der Elektroenergieübertragungseinrichtung 1 ist eine Wartungseinheit 9 vorgesehen. Die Wartungseinheit 9 ist ortsveränderlich ausgebildet, so dass die Wartungseinheit 9 beispielsweis in einem Container oder auf einer Containerplattform aufgebaut sein kann. Die Wartungseinheit 9 weist mehrere Filteranordnungen 10a, 10b, 10c, 10d, 10e auf. Jede der Filteranordnungen 10a, 10b, 10c, 10d, 10e dient einem Behandeln von aus der Umgebung der Elektroenergieübertragungseinrichtung 1 entnommener Luft. Dabei sind die Filteranordnungen 10a, 10b, 10c, 10d, 10e kaskadierend aufgebaut, so dass mit zunehmender Anzahl passierter Filteranordnungen 10a, 10b, 10c, 10d, 10e die atmosphärische Luft, welche aus der Umgebung der Elektroenergieübertragungseinrichtung entnommen wurde, im Reinheitsgrad verbessert ist. Die Filteranordnungen 10a, 10b, 10c, 10d, 10e können auch als Nullluftgenerator bezeichnet werden. Die erste Filteranordnung 10a ist als Lufteinlauf ausgebildet, wobei eine großflächige Lufteintrittsöffnung mit einer gitterartigen Barriere versehen ist, um ein Eindringen von großen Fremdkörpern in die Wartungseinheit 9 zu verhindern. Auf die erste Filteranordnung 10a folgt eine zweite Filteranordnung 10b, in welcher aus dem einströmenden Luftvolumen Partikel und Aerosole entfernt werden. Beispielsweise kann in der ersten Filteranordnung auch Feuchtigkeit separiert werden, so dass eine Trocknung der einströmenden Luft erfolgt. In einer dritten Filteranordnung 10c besteht nunmehr die Möglichkeit, Kohlenwasserstoffe durch Oxidation aus der einströmenden Luft zu entfernen. Zur Beförderung der Oxidation kann eine Temperierung der einströmenden Luft erfolgen. Zusätzlich kann ein Katalysator eingesetzt werden, um gasförmige Kohlenwasserstoffe zum Beispiel in Kohlendioxid CO₂ und Wasser H₂O zu wandeln und diese dann aus der dritten Filteranordnung 10c zu entnehmen. In einer vierten Filteranordnung 10d besteht nunmehr die Möglichkeit durch weitere Behandlung der aus der Umgebung entnommenen atmosphärischen Luft mittels eines Adsorptionsfilters Restanteile von organischen Verbindungen, wie zum Beispiel Kohlenwasserstoffe, weiter zu binden. In einer fünften Filteranordnung 10e kann nunmehr in einem Feinststaubfilter eine mechanische Reinigung von verbliebenen Fremdteilchen vorgenommen werden.

Eine Passage von Luft durch die Filteranordnungen 101, 10b, 10c, 10d, 10e kann durch ein Gebläse befördert werden. Nach einer Passage der verschiedenen Filteranordnungen 10 a, 10b, 10c, 10d, 10e liegt nunmehr eine behandelte, insbesondere eine gereinigt aus der Umgebung entnommene atmosphärische Luft vor. Mittels eines Kompressors 11 besteht nunmehr die Möglichkeit, die behandelte aus der Umgebung entnommen atmosphärische Luft unter einen Überdruck zu setzen und in einem Zwischenspeicher 12 zwischen zu speichern. Der Kompressor 11 übernimmt die Funktion eines Gebläses um einen Luftstrom durch die Filteranlagen 10a, 10b, 10c, 10d, 10e zu befördern. Mittels des Zwischenspeichers 12 können beispielsweise Schwankungen während der Behandlung der atmosphärischen Luft in den Filteranordnungen 10a, 10b, 10c, 10d, 10e ausgeglichen werden. Am Ausgang des Zwischenspeichers 12 schließt sich eine Ventilbaugruppe 13 an. Über verschiedene Ventile der Ventilbaugruppe 13 ist es möglich, im Zwischenspeicher 12 zwischengespeicherte behandelte atmosphärische Luft in den Fluidaufnahmeraum 3 der Elektroenergieübertragungseinrichtung strömen zu lassen. Die Ventilbaugruppe 13 weist dazu ein Ausgangsventil 14 auf. Ausgangsseitig ist das Ausgangsventil 14 mit einer Koppelstelle versehen, um über eine demontierbare Verrohrung 15 eine Verbindung mit der Befüllarmatur 8 der Elektroenergieübertragungseinrichtung 1 herzustellen. Das Ausgangsventil 14 der Ventilbaugruppe 13 ist wiederum mit einem Zwischenspeicherausgangsventil 16 verbunden. Über das Zwischenspeicherausgangsventil 16 ist ein Verschließen des Zwischenspeichers 12 möglich, so dass innerhalb des Zwischenspeichers 12 ein komprimiertes behandeltes Luftvolumen eingeschlossen werden kann. Mit einem Öffnen des Zwischenspeicherausgangsventils 16 sowie dem Ausgangsventil 14 der Ventilbaugruppe 13 ist es möglich, aus dem Zwischenspeicher 12 in den Fluidaufnahmeraum 3 ein komprimiertes Fluid übertreten zu lassen.

In der Verrohrung zwischen dem Zwischenspeicherausgangsventil 16 sowie dem Ausgangsventil 14 der Ventilbaugruppe 13 sind eine Absaugstichleitung 17 sowie eine Ablassstichleitung 18 angeordnet. Sowohl die Absaugstichleitung 17 als auch die Ablassstichleitung 18 sind jeweils über ein Ventil verschließbar. Die Ablassstichleitung 18 mündet in einen Katalysator 19 durch welchen ein aus der Ventilbaugruppe 13 herauszulassendes Fluid in die Umgebung abgegeben werden kann. Der Katalysator 19 sorgt für eine Katalyse von Fremdstoffen, welche nicht in die Umgebung der Elektroenergieübertragungseinrichtung abgelassen werden sollen. Der Katalysator 11 kann insbesondere einer Wandlung von Stickoxiden dienen.

Im Folgenden wird ein Befüllen des Fluidaufnahmeraumes der Elektroenergieübertragungseinrichtung 1 beschrieben.

Es wird davon ausgegangen, dass der Fluidaufnahmeraum 3 der Elektroenergieübertragungseinrichtung 1 mit einem undefinierten Gas gefüllt ist. Zunächst wird die Befüllarmatur 8 geöffnet. Das Zwischenspeicherausgangsventil 16 ist verschlossen. Ebenso ist das Ventil in der Ablassstichleitung 18 verschlossen. Das Ventil in der Absaugstichleitung 17 ist geöffnet. Ebenso ist das Ausgangsventil 14 der Ventilbaugruppe 13 geöffnet. Dadurch besteht die Möglichkeit, mittels einer in der Absaugstichleitung 17 befindlichen Unterdruckpumpe 20 den Fluidaufnahmeraum 3 unter Unterdruck zu setzen. Es wird ein Vakuum im Fluidaufnahmeraum 3 erzeugt. Während des Vakuumierens des Fluidaufnahmeraumes 3 erfolgt parallel eine Reinigung von aus der Umgebung der Elektroenergieübertragungseinrichtung übernommener Luft. Dazu wird mittels des Kompressors 11 aus der Umgebung Luft durch die Filteranordnungen 10a, 10b, 10c, 10d, 10e angesaugt, woraufhin die behandelte aus der Umgebung entnommene atmosphärische Luft in den Zwischenspeicher 12 gepumpt und dort unter Überdruck gesetzt wird. Mit einer ausreichenden Erlangung eines Vakuums im Innern des Fluidaufnahmeraumes 3 kann die Absaugstichleitung 17 verschlossen werden. Die Unterdruckpumpe 20 kann ihre Arbeit einstellen. Nunmehr besteht die Möglichkeit, das Zwischenspeicherausgangsventil 16 zu öffnen und im Zwischenspeicher 12 zwischengespeicherte gereinigte atmosphärische Luft in die Ventilbaugruppe 13 einlaufen zu lassen. Die gereinigte Luft passiert dabei das Ausgangsventil 14 und die Befüllarmatur 8 und strömt getrieben durch eine Druckdifferenz in den Fluidaufnahmeraum 3 hinein. Dabei entleert sich der Zwischenspeicher 12 zumindest teilweise. Mittels des Kompressors 11 kann ein Ausgleich des aus dem Zwischenspeicher 12 entnommenen Volumens an gereinigter Luft erfolgen. Es wird weiterhin Luft über die Filteranordnung 10a, 10b, 10c, 10d angesaugt und weiterhin behandelte Luft in das Innere des Fluidaufnahmeraumes 3 verbracht. Ist im Fluidaufnahmeraum 3 eine ausreichende Dichte (spezifischer Druck bei spezifischer Temperatur) erreicht, kann ein Verschließen der Befüllarmatur 8 des Kapselungsgehäuses 2 vorgenommen werden. Ebenso kann ein Verschließen des Zwischenspeicherausgangsventils 16 vorgenommen werden. Bedarfsweise kann dann ein Abstellen des Kompressors 11 erfolgen, da weiteres behandeltes Fluid für den Fluidaufnahmeraum 3 der Elektroenergieübertragungseinrichtung 1 nicht benötigt wird. Sollten noch weitere Fluidaufnahmeräume 3 dieser oder einer weiteren Elektroenergieübertragungseinrichtung 1 zu befüllen sein, kann jedoch auch eine zwischenzeitliche Erzeugung von komprimierter und gereinigter Luft und ein Zwischenspeichern derselben in dem Zwischenspeicher 12 erfolgen. Nunmehr ist es möglich die Verrohrung zwischen dem Ausgangsventil 14, der Ventilbaugruppe 13 sowie der Befüllarmatur 8 abzubauen.

Im Folgenden soll beschrieben werden, wie eine Entnahme von gereinigtem Fluid aus dem Fluidaufnahmeraum 3 vorgenommen werden kann. Zunächst sind die Befüllarmatur 8 sowie das Ausgangsventil 14 über eine Verrohrung 15 miteinander verrohrt. Das Zwischenspeicherausgangsventil 16 ist geschlossen. Ebenso ist das Ventil in der Absaugstichleitung 17 verschlossen. Nunmehr besteht die Möglichkeit das Ventil in der Ablassstichleitung 18 zu öffnen. Darauf folgend können die Befüllarmatur 8 sowie das Ausgangsventil 14 geöffnet werden. Getrieben durch den Überdruck im Fluidaufnahmeraum 3 strömt das dort befindliche Fluid über die Befüllarmatur 8, die Verrohrung 15 sowie das Ausgangsventil 14 in die nunmehr geöffnete Ablassstichleitung 18 und von dort in den Katalysator 19. Dort wird durch eine Katalyse ein Umwandeln von Fremdstoffen bewirkt und das Fluid, welches vormals der Umgebung der Elektroenergieübertragungseinrichtung 1 entnommen wurde, wird der Umgebung der Elektroenergieübertragungseinrichtung 1 wieder zurückgeführt. Um eine Entnahme des Fluids aus dem Fluidaufnahmeraum 3 zu befördern kann in der Ablassstichleitung 18 auch die Anordnung einer Pumpe vorgesehen sein. Bedarfsweise kann auch die Absaugstichleitung 17 zum Ablassen eines im Fluidaufnahmeraum 3 befindlichen Fluids (ggf. mit einem Katalysator/Filter) dienen. Durch einen Unterdruck im Inneren des Fluidaufnahmeraumes 3 kann sichergestellt werden, dass die vormals aus der Umgebung entnommene atmosphärische Luft nahezu vollständig der Umgebung zurückzugegeben wird.

Mit einem Schließen der Ablassstichleitung 18 ist eine Entnahme eines Fluids aus dem Fluidaufnahmeraum 3 über die Wartungseinheit 9 abgeschlossen.

## Patentansprüche

1. Lebenszyklusmanagement eines elektrisch isolierenden Fluids, welches zu einem elektrischen Isolieren in einem Fluidaufnahmeraum (3) einer Elektroenergieübertragungseinrichtung (1) anzuordnen ist, wobei
- der Umgebung der Elektroenergieübertragungseinrichtung atmosphärische Luft entnommen, die entnommene Luft behandelt, insbesondere gereinigt, und in den Fluidaufnahmeraum (3) eingebracht wird,
- vor einer Verbringung der entnommenen Luft in den Fluidaufnahmeraum (3) derselbe evakuiert wird,
- mittels eines Kompressors (11) aus der Umgebung Luft durch Filteranordnungen (10a, 10b, 10c, 10d, 10e) angesaugt wird, woraufhin die behandelte aus der Umgebung entnommene atmosphärische Luft in einen Zwischenspeicher (12) gepumpt und dort unter Überdruck gesetzt wird, so dass während des Vakuumierens des Fluidaufnahmeraumes (3) parallel eine Reinigung der aus der Umgebung der Elektroenergieübertragungseinrichtung entnommenen Luft erfolgt.

2. Lebenszyklusmanagement eines elektrisch isolierenden Fluids nach Anspruch 1,
**dadurch gekennzeichnet, dass** das Fluid unter Überdruck gesetzt wird.

3. Lebenszyklusmanagement eines elektrisch isolierenden Fluids nach einem der Ansprüche 1 oder 2,
**dadurch gekennzeichnet, dass** die Speicherkapazität des Zwischenspeichers (12) kleiner ist als die Aufnahmekapazität des Fluidaufnahmeraumes (3).

4. Lebenszyklusmanagement eines elektrisch isolierenden Fluids nach einem der Ansprüche 1 bis 3,
**dadurch gekennzeichnet, dass** das im Fluidaufnahmeraum (3) befindliche Fluid in die Umgebung abgelassen wird.

5. Lebenszyklusmanagement eines elektrisch isolierenden Fluids nach Anspruch 4,
**dadurch gekennzeichnet, dass** vor einer Abgabe des Fluids an die Umgebung das Fluid behandelt, insbesondere gereinigt, wird.

## Claims

1. Life cycle management of an electrically insulating fluid, which is to be arranged in a fluid-holding chamber (3) of an electrical energy transmission device (1) for the purpose of electrical insulation, wherein
- atmospheric air is removed from the surroundings of the electrical energy transmission device, the air removed is treated, in particular cleaned, and is introduced into the fluid-holding chamber (3),
- before the air removed is brought into the fluid-holding chamber (3), the chamber is evacuated,
- air is sucked in from the surroundings through filter arrangements (10a, 10b, 10c, 10d, 10e) by means of a compressor (11), whereupon the treated atmospheric air removed from the surroundings is pumped into an intermediate store (12) and is pressurized there, so that, during the evacuation of the fluid-holding chamber (3), cleaning of air removed from the surroundings of the electrical energy transmission device take places in parallel.

2. Life cycle management of an electrically insulating fluid according to Claim 1,
**characterized in that** the fluid is pressurized.

3. Life cycle management of an electrically insulating fluid according to either of Claims 1 and 2,
**characterized in that** the storage capacity of the intermediate store (12) is smaller than the holding capacity of the fluid-holding chamber (3).

4. Life cycle management of an electrically insulating fluid according to one of Claims 1 to 3,
**characterized in that** the fluid situated in the fluid-holding chamber (3) is discharged into the surroundings.

5. Life cycle management of an electrically insulating fluid according to Claim 4,
**characterized in that**, before a discharge of the fluid to the surroundings, the fluid is treated, in particular cleaned.

## Revendications

1. Gestion du cycle de vie d'un fluide isolant électriquement, qui, pour une isolation électrique, est disposé dans un espace (3) de réception de fluide d'un dispositif (1) de transport d'énergie électrique, dans lequel
- on prélève, de l'atmosphère ambiante du dispositif de transport d'énergie électrique, de l'air atmosphérique, on traite l'air prélevé, en particulier en l'épurant, et on l'introduit dans l'espace (3) de réception d'un fluide,
- avant de mettre le fluide prélevé dans l'espace (3) de réception d'un fluide, on y fait le vide,
- au moyen d'un compresseur (11), on aspire, de l'atmosphère ambiante, de l'air en passant par des dispositifs (10a, 10b, 10c, 10d, 10e) de filtration, puis on pompe l'air atmosphérique traité, prélevé de l'atmosphère ambiante, dans un accumulateur (12) intermédiaire et on l'y soumet à une surpression, de manière à effectuer, pendant la mise sous vide de l'espace (3) de réception d'un fluide, en parallèle, une épuration de l'air prélevé de l'atmosphère ambiante du dispositif de transport d'énergie électrique.

2. Gestion du cycle de vie d'un fluide isolant électriquement suivant la revendication 1,
**caractérisée en ce que**
l'on soumet le fluide à une surpression.

3. Gestion du cycle de vie d'un fluide isolant électriquement suivant l'une des revendications 1 ou 2,
**caractérisée en ce que**
la capacité de l'accumulateur (12) intermédiaire est plus petite que la capacité de réception de l'espace (3) de réception d'un fluide.

4. Gestion du cycle de vie d'un fluide isolant électriquement suivant l'une des revendications 1 à 3,
**caractérisée en ce que**
l'on évacue dans l'atmosphère ambiante le fluide se trouvant dans l'espace (3) de réception d'un fluide.

5. Gestion du cycle de vie d'un fluide isolant électriquement suivant la revendication 4,
**caractérisée en ce que**,
avant de céder le fluide à l'atmosphère ambiante, on traite le fluide, en particulier en l'épurant.
